Europäisches Patentamt

European Patent Office

Office européen des brevets

(11) Numéro de publication : **0 330 572 B1**

(12) FASCICULE DE BREVET EUROPEEN

(45) Date de publication du fascicule du brevet :
24.06.92 Bulletin 92/26

(51) Int. Cl.⁵ : **B60P 1/64**

(21) Numéro de dépôt : **89400505.7**

(22) Date de dépôt : **23.02.89**

(54) **Potence de chargement/déchargement à bras rétractable, et véhicule la comportant.**

(30) Priorité : **24.02.88 FR 8802244**

(43) Date de publication de la demande :
**30.08.89 Bulletin 89/35**

(45) Mention de la délivrance du brevet :
**24.06.92 Bulletin 92/26**

(84) Etats contractants désignés :
**AT BE CH DE ES FR GB GR IT LI LU NL SE**

(56) Documents cités :
**EP-A- 0 107 326**
**DE-A- 2 550 763**
**DE-A- 3 037 840**
**FR-A- 2 294 877**
**FR-A- 2 442 213**

(73) Titulaire : **MARREL**
**Zone Industrielle Sud**
**F-42160 Andrezieux-Boutheon (FR)**

(72) Inventeur : **Lambert, Bernard**
**Les Charmes Chevagny les Chevrières**
**F-71960 Pierreclos (FR)**
Inventeur : **Jochum, Alain**
**5 place Maréchal Foch Primevères**
**F-42000 Saint-Etienne (FR)**

(74) Mandataire : **Rinuy, Santarelli**
**14, avenue de la Grande Armée**
**F-75017 Paris (FR)**

Jouve, 18, rue Saint-Denis, 75001 PARIS

## Description

L'invention concerne une potence destinée à être montée sur le châssis d'un véhicule pour le chargement et le déchargement d'une charge sur ce véhicule.

De manière connue, une telle potence comporte un premier bras destiné à être articulé sur le châssis du véhicule et, rapporté à celui-ci, un second bras normalement perpendiculaire à ce premier bras et terminé par un crochet pour la saisie d'une charge.

En configuration de chargement, ce premier bras est horizontal tandis que le second bras est vertical.

Un tel bras est généralement destiné à saisir par son crochet un arceau ménagé à la partie haute d'une charge. Ce bras a donc une longueur généralement peu inférieure à la hauteur de cette charge.

Ces potences sont généralement montées sur des camions comportant une cabine à l'avant, et le second bras vient, en configuration de chargement, derrière cette cabine vis à vis de laquelle il vient même parfois en saillie vers le haut.

Pour des raisons de réduction d'encombrement, notamment pour le stockage de tels camions, (ou pour le ramener dans un format normalisé dit "aérien"), il a déjà été proposé de rendre escamotable la partie haute de la cabine, mais il subsiste le second bras de la potence.

L'invention a pour objet de pallier à cet inconvénient des potences connues en proposant une potence à bras vertical réglable en hauteur.

Elle propose à cet effet une potence destinée à être montée sur le châssis d'un véhicule pour le chargement et le déchargement d'une charge sur ce véhicule, comportant un premier bras destiné à être articulé au moins indirectement sur le châssis du véhicule et, rapporté à ce premier bras, un second bras : normalement perpendiculaire à ce premier bras, terminé par un crochet muni d'un bec d'accrochage pour la saisie de la charge en une partie haute de celle-ci, destiné à être vertical en une configuration de chargement de la potence où le premier bras est horizontal, formé d'un premier tronçon rapporté au premier bras et d'un second tronçon, portant le crochet, mobile par rapport au premier tronçon entre une configuration effacée dans laquelle le second tronçon longe le premier tronçon sur la majeure partie de sa longueur, et une configuration déployée dans laquelle le second tronçon est, par la majeure partie de sa longueur, dans le prolongement du premier tronçon ; potence caractérisée en ce qu'elle est hors service dans la configuration effacée, et en ce qu'elle comporte au moins une paire d'organes complémentaires de blocage pour le verrouillage du second tronçon dans sa configuration déployée de travail, la potence n'étant opérationnelle que dans cette configuration déployée verrouillée du second bras.

On appréciera que l'invention, d'une part découle d'un problème technique nouveau, et propose d'autre part de dissocier en deux le bras d'un dispositif de force destiné à exercer des efforts importants, ce qui va à l'encontre de la démarche normale de l'homme de métier.

A cet égard, EP-A-0 107 326 et FR-A-2 294 877 permettent d'apprécier l'originalité de l'invention. Dans chacun de ces deux documents, la potence est conforme aux caractéristiques figurant dans le préambule de la revendication 1, mais le problème technique résolu est fondamentalement différent car il s'agit de manipuler les charges dans des circonstances particulières, EP-A-0 107 326 se préoccupant des charges de faible hauteur (plates-formes) tandis que FR-A-2 294 877 vise les charges situées en contrebas de sol où se trouve le véhicule.

L'invention s'applique à tout type de potence, que le second bras soit rigidement lié au premier bras ou lié à celui-ci par une articulation à faible débattement angulaire.

Selon des dispositions préférées de l'invention, éventuellement combinées :

– le second tronçon est monté coulissant dans le premier tronçon ;

– un même organe de blocage prévu sur le premier tronçon est adapté à coopérer avec des organes complémentaires distincts ménagés sur le second tronçon pour le verrouillage de ce dernier dans l'une et l'autre de ses positions ;

– deux organes de blocage sont prévus sur le premier tronçon pour le verrouillage du second tronçon dans chacune de ses positions ;

– le second tronçon est articulé sur le premier tronçon ;

– le second tronçon est articulé autour d'un axe perpendiculaire aux premier et second bras en sorte de pivoter dans le plan de ces bras, à l'intérieur de l'angle défini par ces bras ;

– une première paire d'organes complémentaires de blocage est prévue auprès de l'articulation entre les premier et second tronçons et une seconde paire d'organes complémentaires de blocage est prévue à proximité des extrémités opposées de ces tronçons ;

– ladite paire d'organes complémentaires de blocage comporte une goupille portée par l'un des tronçons et un orifice ménagé dans l'autre des tronçons ;

– cet orifice est matérialisé par un tube de renfort traversant ledit autre tronçon.

L'invention propose également un véhicule équipé d'une telle potence.

Des objets, caractéristiques et avantages de l'invention ressortent de la description qui suit, donnée à titre d'exemple non limitatif, en regard des dessins annexés sur lesquels :

– la figure 1 est une vue latérale partielle d'une potence selon l'invention en configuration effacée ou rétractée ;

– la figure 2 en est une vue analogue, en configuration déployée ;

– la figure 3 est une vue partielle en coupe longitudinale d'une potence similaire selon une variante de réalisation ;

– la figure 4 est une vue latérale partielle d'une autre potence selon un autre mode de réalisation, en configuration effacée, avec le crochet représenté, isolé, dans la position qu'il occuperait en configuration déployée ;

– la figure 5 est une vue schématique en élévation d'un camion équipé d'une potence du type représenté aux figures 1 et 2, en configuration rétractée ;

– la figure 6 en est une vue dans laquelle la potence est en position de déchargement ; et

– la figure 7 en est une vue dans laquelle la potence est en position déployée de chargement.

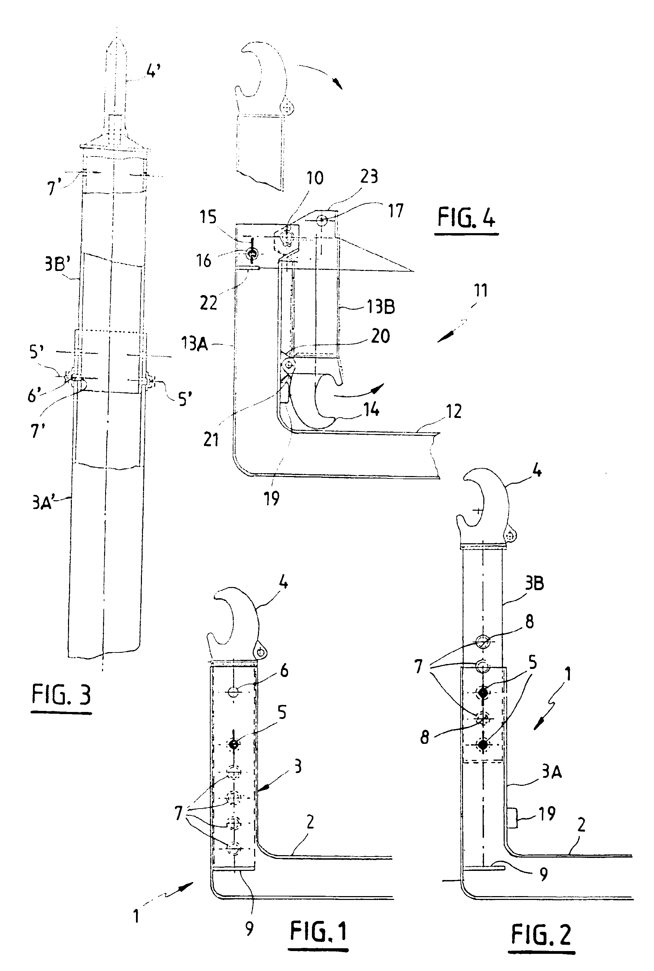

La potence 1 représentée partiellement aux figures 1 et 2 comporte un premier bras 2 et, fixé rigidement à celui-ci en faisant un angle droit, un second bras 3 dirigé vers le haut et terminé à sa partie supérieure par un crochet 4 muni d'un bec d'accrochage permettant le soulèvement d'une charge située au-dessus du premier bras.

Le second bras 3 est dissocié en un premier tronçon 3A lié au premier bras et en un second tronçon 3B portant le crochet 4 et adapté à coulisser dans le premier tronçon 3A entre une position rétractée (figure 1) et une position déployée (figure 2) dans laquelle le crochet 4, d'une hauteur normalisée (normes DIN voire AFNOR) par rapport au premier bras, est adapté à saisir l'arceau ménagé à la partie haute d'une charge non représentée, telle qu'un conteneur, une benne ou une plate-forme munie en sa partie avant d'une extension vers le haut.

Des organes complémentaires sont prévus sur les tronçons 3A et 3B en vue de leur verrouillage au moins en leur position relative déployée, laquelle correspond à la seule configuration opérationnelle de la potence.

Ces organes complémentaires sont ici constitués d'une goupille 5 adaptée à maintenir en regard des orifices 6 ménagés dans le premier tronçon 3A avec des orifices 7 ménagés dans le second 3B, avantageusement matérialisés par des tubes de renfort 8 traversant ledit second tronçon.

Les orifices 6 sont ici au nombre de deux en sorte de permettre la mise en oeuvre simultanée de deux goupilles 5 en configuration déployée du second tronçon (figure 2)

Les orifices 7 sont ici en un nombre supérieur à deux, voire trois, en sorte de permettre un verrouillage par goupille du second tronçon en position rétractée (figure 1)

Ces orifices 7 sont ici au nombre de cinq, avec un écartement égal à la moitié de l'écartement axial des orifices 6. Au moins une position intermédiaire est ainsi possible.

Une plaque d'arrêt 9 est prévue au fond du premier tronçon 3A pour l'arrêt du second tronçon 3B en position effacée, avec mise en regard d'orifices 6 et 7.

La figure 3 représente une variante de réalisation dans laquelle des éléments correspondants à ceux des figures 1 et 2 sont désignés par les mêmes chiffres de référence, avec adjonction de l'indice "prime".

Les organes complémentaires de blocage sont ici constitués de pions 5′ à rappel élastique portés par le premier tronçon 3A′, adaptés à maintenir en regard des orifices 6′ et 7′ respectivement prévus dans le premier tronçon 3A′ et dans le second tronçon 3B′.

Dans l'exemple de la figure 4, la potence 11 comporte un premier bras 12 et un second bras 13, portant un crochet 14 muni d'un bec d'accrochage, et formé d'un premier tronçon 13A sur lequel est articulé autour d'un axe 10, un second tronçon 13B adapté à pivoter dans le plan des bras 12 et 13 en sorte d'amener, en une configuration effacée, le crochet 14 dans l'angle du premier bras 12 et du premier tronçon 13A.

Le crochet 14 vient avantageusement en butée contre un tampon 19 par ailleurs prévu pour la venue en butée d'une charge en fin de chargement.

Un verrouillage de ce second tronçon 13B le long du premier 13A est ici assuré par deux pattes trouées 20 et 21 ménagées respectivement sur les tronçons 13A et 13B, adaptées à venir côte à côte en configuration repliée et à être maintenues ainsi par une goupille non représentée.

A proximité de l'axe d'articulation 10 sont prévus des orifices 16 et 17 respectivement ménagés dans les premier et second tronçons et à venir en regard en configuration déployée et à être maintenues ainsi par une goupille 15.

Une plaque 22 est prévue pour la venue en butée d'une tranche 23 du second tronçon en cette configuration dépliée.

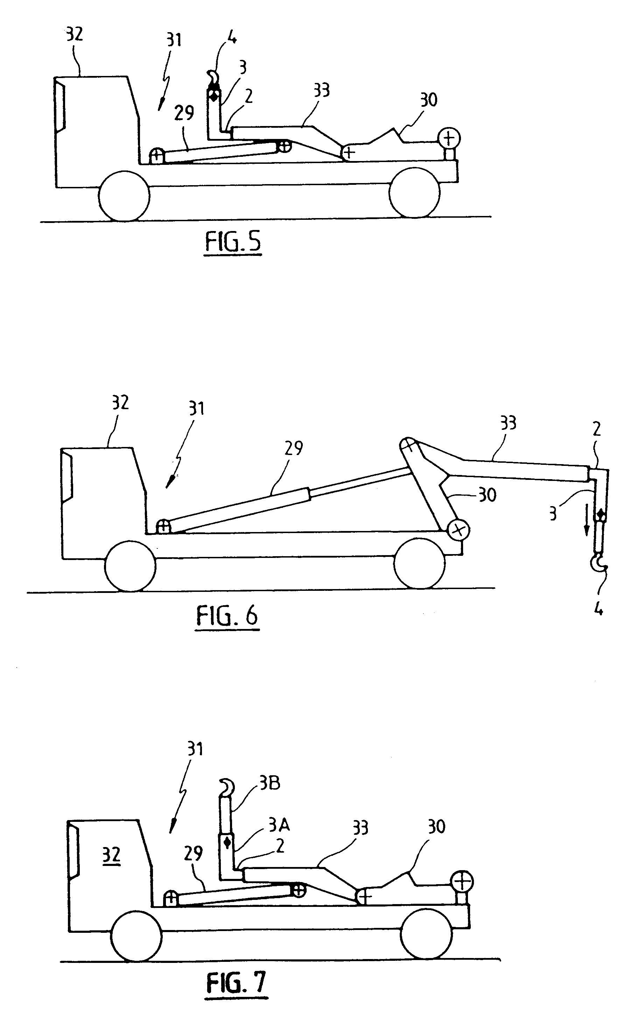

Ainsi qu'il ressort des figures 5 à 7, la manoeuvre d'une telle potence entre les positions rétractée (potence hors service) et déployée (potence opérationnelle) de son second bras peut se faire grâce à la gravité, sans effort.

Ainsi, pour déployer ce bras 3, il suffit de basculer vers l'arrière sous l'action d'un vérin 29 le premier bras 2 ainsi qu'un faux châssis 30 auquel il est articulé et qui est lui-même articulé en sa partie arrière sur le châssis du camion 31 comportant une cabine 32. En fait, le premier bras 2 est ici monté télescopiquement dans un rail de guidage 3.

Pour peu que les organes complémentaires de blocage aient été déconnectés, on comprend que le second bras se déploie par simple gravité selon la flèche de la figure 6. Il suffit alors de remettre en place la goupille 5 pour verrouiller ce bras. On peut alors, en ramenant la potence vers l'avant, obtenir le bras 3 en configuration de chargement. On peut aussi, dès la position de la figure 6, saisir une charge par le crochet 4.

A l'inverse, à partir de la configuration de la figure 6, on peut ramener le bras 3 en la configuration repliée de la figure 5 pour peu que les organes de blocage aient été dégagés au préalable.

Les mêmes explications valent pour l'exemple de la figure 4.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Potence destinée à être montée sur le châssis d'un véhicule (31) pour le chargement et le déchargement d'une charge sur ce véhicule, comportant un premier bras (2, 12) destiné à être articulé au moins indirectement sur le châssis du véhicule et, rapporté à ce premier bras, un second bras (3, 3', 13) : normalement perpendiculaire à ce premier bras, terminé par un crochet (4) muni d'un bec d'accrochage pour la saisie de la charge en une partie haute de celle-ci, destiné à être vertical en une configuration de chargement de la potence où le premier bras est horizontal, formé d'un premier tronçon (3A, 3A', 13A) rapporté au premier bras et d'un second tronçon (3B, 3B', 13B), portant le crochet, mobile par rapport au premier tronçon entre une configuration effacée dans laquelle le second tronçon longe le premier tronçon sur la majeure partie de sa longueur, et une configuration déployée dans laquelle le second tronçon est, par la majeure partie de sa longueur, dans le prolongement du premier tronçon ; potence caractérisée en ce qu'elle est hors service dans la configuration effacée, et en ce qu'elle comporte au moins une paire d'organes complémentaires de blocage (5, 6, 7 ; 5', 6', 7' ; 15, 16, 17) pour le verrouillage du second tronçon dans sa configuration déployée de travail, la potence n'étant opérationnelle que dans cette configuration déployée verrouillée du second bras.

2. Potence selon la revendication 1, caractérisée en ce que le second tronçon (3B, 3B') est monté coulissant dans le premier tronçon.

3. Potence selon la revendication 2, caractérisée en ce qu'un même organe de blocage (5, 6) prévu sur le premier tronçon est adapté à coopérer avec des organes complémentaires distincts (7) ménagés sur le second tronçon pour le verrouillage de ce dernier dans l'une et l'autre de ses positions.

4. Potence selon la revendication 3, caractérisée en ce que deux organes de blocage sont prévus sur le premier tronçon pour le verrouillage du second tronçon dans chacune de ses positions.

5. Potence selon la revendication 1, caractérisée en ce que le second tronçon (13B) est articulé sur le premier tronçon (13A).

6. Potence selon la revendication 5, caractérisée en ce que le second tronçon est articulé autour d'un axe (10) perpendiculaire aux premier (13A) et second (13B) bras en sorte de pivoter dans le plan de ces bras, à l'intérieur de l'angle défini par ces bras.

7. Potence selon la revendication 5 ou la revendication 6, caractérisée en ce qu'une première paire d'organes complémentaires de blocage (15, 16, 17) est prévue auprès de l'articulation (10) entre les premier et second tronçons et une seconde paire d'organes complémentaires de blocage (20, 21) est prévue à proximité des extrémités opposées de ces tronçons.

8. Potence selon l'une quelconque des revendications 1 à 7, caractérisée en ce que ladite paire d'organes complémentaires de blocage comporte une goupille (5, 15) portée par l'un des tronçons et un orifice ménagé (7, 17) dans l'autre des tronçons.

9. Potence selon la revendication 8, caractérisée en ce que cet orifice est matérialisé par un tube de renfort (8) traversant ledit autre tronçon.

10. Véhicule de transport comportant un châssis sur lequel est monté une potence selon l'une quelconque des revendications 1 à 9.

## Patentansprüche

1. Einziehbarer Arm zur Montage auf dem Fahrgestell eines Fahrzeuges (31) zum Aufnehmen und Absetzen einer Last auf diesem Fahrzeug, umfassend einen ersten Ausleger (2, 12), der zumindest indirekt auf dem Fahrgestell des Fahrzeuges ausschwenkbar ist und einen im ersten Ausleger eingesetzten zweiten Ausleger (3, 3', 13) : üblicherweise senkrecht zum ersten Ausleger, der in einem mit einem Schnabel versehenen Haken (4) mündet zum Aufgreifen der teilweise oben liegenden Last, vertikal in der Lastaufnahmestellung des Armes, in der der erste Ausleger horizontal ist, gebildet aus einem im ersten Ausleger eingesetzten ersten Abschnitt (3A, 3A', 13A) und einem zweiten Abschnitt (3B, 3B', 13B), der den Haken trägt und der in bezug auf den ersten Abschnitt beweglich ist zwischen einer zurückgeschobenen Stellung, in der der zweite Abschnitt sich über den Großteil der Länge des ersten Abschnittes erstreckt, und einer ausgefahrenen Stellung, in der der zweite Abschnitt über den Großteil seiner Länge in der Verlängerung des ersten Abschnittes verläuft; dadurch gekennzeichnet, daß der Arm in der eingezogenen Stellung außer Betrieb ist, und dadurch daß er zumindest ein Paar ergänzende Verriegelungsmittel (5, 6, 7; 5', 6', 7'; 15, 16, 17) umfaßt für die Verriegelung des zweiten Abschnittes in der ausgefahrenen Arbeitsstellung, wobei der Arm nur in dieser ausgefahrenen, verriegelten Stellung des zweiten Auslegers betriebsbereit ist.

2. Arm nach Anspruch 1, dadurch gekennzeichnet, daß der zweite Abschnitt (3B, 3B') im ersten Abschnitt verschiebbar montiert ist.

3. Arm nach Anspruch 2, dadurch gekennzeichnet, daß ein gleiches am ersten Abschnitt vorgesehenes Verriegelungsmittel (5, 6) so angepaßt ist, daß es mit den ergänzenden, anderen Mittel (7), die auf dem zweiten Abschnitt für dessen Verriegelung in der einen und anderen Stellung angebracht sind, zusammenwirkt.

4. Arm nach Anspruch 3, dadurch gekennzeichnet, daß die zwei Verriegelungsmittel auf dem ersten Abschnitt vorgesehen sind für die Verriegelung des zweiten Abschnittes in dessen jeweiligen Stellungen.

5. Arm nach Anspruch 1, dadurch gekennzeichnet, daß der zweite Abschnitt (13B) auf dem ersten Abschnitt (13A) beweglich angeordnet ist.

6. Arm nach Anspruch 5, dadurch gekennzeichnet, daß der zweite beschnitt um eine zum ersten (13A) und zum zweiten Ausleger (13B) vertikale Achse (10) beweglich angeordnet ist, um im Bereich dieser Ausleger, innerhalb des durch diese Ausleger definierten Winkels, auszuschwenken.

7. Arm nach Anspruch 5 oder Anspruch 6, dadurch gekennzeichnet, daß ein erstes Paar ergänzende Verriegelungsmittel (15, 16, 17) neben dem Gelenk (10) zwischen den ersten und zweiten Abschnitten vorgesehen ist und ein zweites Paar ergänzende Verriegelungsmittel (20, 21) nahe den gegenüberliegenden Enden dieser Abschnitte vorgesehen ist.

8. Arm nach einem der Ansprüche 1 bis 7, dadurch gekennzeichnet, daß das ergänzende Paar Verriegelungsmittel einen von einem der Abschnitte gehaltenen Stift (5, 15) und eine im anderen Abschnitt angebrachte Öffnung (7, 17) umfaßt.

9. Arm nach Anspruch 8, dadurch gekennzeichnet, daß diese Öffnung durch ein Verstärkungsrohr (8) gebildet wird, das durch den anderen Abschnitt hindurchgeht.

10. Transportfahrzeug umfassend ein Fahrgestell, auf dem ein Arm nach Anspruch 1 bis 9 montiert ist.

## Claims

1. A lifting device adapted to be mounted on the chassis of a vehicle (31) for loading and unloading a load on the said vehicle (31) comprising a first arm (2,12) adapted to be articulated at least indirectly to the chassis of the vehicle and, attached to the said first arm, a second arm (3,3',13) which is normally perpendicular to the said first arm and ends in a hook (4) equipped with a retaining tongue for grasping an upper part of the said load, the said second arm being designed to be disposed vertically in a loading configuration of the lifting device in which the said first arm is horizontal, and being constituted by a first section (3A,3A',13A) connected to the said first arm and a second section (3B,3B',13B) carrying the hook and movable relative to the said first section between a retracted configuration, in which a major part of the length of the second section is situated along the length of the said first section, and an extended configuration in which a major part of the length of the second section forms an extension of the said first section, the lifting device being characterized in that it is out of service in the retracted configuration and in that it comprises at least one pair of complementary locking elements (5,6,7; 5',6',7'; 15,16,17) for locking the said second section in its extended, working configuration, the said lifting device being operational only in this locked, extended configuration of the second arm.

2. A lifting device according to claim 1, characterized in that the second section (3B,3B') is slidably mounted in the first section.

3. A lifting device according to claim 2, characterized in that a common locking element (5,6) provided on the said first section is adapted to cooperate with separate complementary elements (7) formed on the second section for locking the latter in each of the two positions.

4. A lifting device according to claim 3, characterized in that two locking elements are provided on the first section for locking the second section in each of its positions.

5. A lifting device according to claim 1, characterized in that the second section (13B) is articulated to the first section (13A).

6. A lifting device according to claim 5, characterized in that the second section is articulated about an axis (10) perpendicular to the first arm (13A) and second arm (13B) so as to pivot in a plane of these arms within an angle defined by the said arms.

7. A lifting device according to claim 5 or claim 6, characterized in that a first pair of complementary locking elements (15,16,17) is provided near the said articulation (10) between the first and second sections and a second pair of complementary locking elements (20,21) is provided near the opposite ends of the said sections.

8. A lifting device according to any one of claims 1 to 7, characterized in that the said pair of complementary locking elements comprises a pin (5,15) carried by one of the said sections and a hole (7,17) formed in the other section.

9. A lifting device according to claim 8, characterized in that the said hole is formed by a reinforcing tube (8) which passes through the said other section.

10. A transport vehicle comprising a chassis on which is mounted a lifting device according to any one of claim 1 to 9.

FIG. 4

FIG. 3

FIG. 1

FIG. 2

FIG.5

FIG. 6

FIG. 7